# EUROPEAN PATENT APPLICATION

(11) **EP 3 480 158 A1**
(43) Date of publication of application: **08.05.2019**
(21) Application number: 18203758.0
(22) Date of filing: 31.10.2018
(51) Int. Cl.: B66C 23/44, B66C 23/46, B66F 9/065, B60P 1/54, B60P 1/64

(54) **LOAD TRANSPORTER**

(30) Priority: 02.11.2017 GB 201718149
(71) Applicant: Hook-Up Solutions Limited, Baldock, Hertfordshire SG7 6PA (GB)
(72) Inventor: STERLING, Charles, Sandy, Bedfordshire SG19 2TP (GB); UNDERDOWN, Mark, Alton, Hampshire GU34 1NY (GB)
(74) Representative: Brookes IP

(57) **Abstract**

A load transporter comprising a flat bed trolley [10], flat bed trolley locomotion means [40; 50], and an articulated crane [30]. T he articulated crane [30] has a first portion [308] including a first end engaged with the flat bed [20] of the trolley [10] and a second end, the first portion [308] movable between a first, rest position with the first and second ends in the plane of the flat bed [20], the first portion [308] providing part of a receiving surface of the flat bed [20], and a second, active position where the second end is remote from the flat bed [20] and the first portion [308] does not form part of a receiving surface of the flat bed [20].

## Description

The invention relates to an apparatus for loading, transporting, and unloading a weight. There is a need in many walks of life to transport a load from one location to another and apart from very small loads which a person may carry, mechanical devices or machinery are utilised for this purpose. A wheel barrow is commonly used to transport a modest load over a small distance, or to transport portions of a larger load, in several journeys, over a small distance. A crane may be used to transport larger or heavier loads over a small distance, and vehicles such as Lorries or other suitable vehicles may be used to transport still larger and heavier loads over larger distances. Various means may be employed to move the load onto and off the vehicle, for example a winch or crane may be used, and this winch or crane may be separate from the vehicle or may be mounted thereon.

Where the winch, crane or other mechanism is separate from the vehicle it is necessary for the vehicle to have access to that winch or crane while loading and unloading, and this is not necessarily convenient. Where the winch, crane or other mechanism is present on the vehicle, it occupies a portion of the real estate of the vehicle restricting the available storage space for the load or weight, and this too is a disadvantage.

The present invention is directed to overcoming at least some of these disadvantages.

Accordingly, in its broadest aspect, the present invention provides a load transporter comprising a flat bed trolley and flat bed trolley locomotion means. In addition the load transporter comprises an articulated crane with a first portion including a first end engaged with the flat bed of the trolley and a second end, the first portion movable between a first, rest position with the first and second ends in the plane of the flat bed, the first portion providing part of a receiving surface of the flat bed, and a second, active position where the second end is remote from the flat bed and the portion does not form part of a receiving surface of the flat bed.

Preferably the crane further comprises a second portion with a first end and a second end, the first end of the second portion engaged with a second end of the first crane portion, the second portion movable between a first, rest position providing a back plate or headstock of the trolley and a second, active position where the second portion does not form such a back plate.

Preferably the first crane portion moves between a rest and an active position pivotally about a pivot point.

Preferably the first end is the pivot point.

Preferably the first crane portion is planar and fits, when in a rest position, into a corresponding gap in the flat bed.

Preferably the first crane portion forms a substantial portion of the flat bed, when in a rest position.

Preferably the first portion is planar and is substantially in the same plane as the flat bed of the trolley when in the first, rest position.

Preferably the first crane portion is planar and is substantially in the same plane as the flat bed of the trolley when in the first, rest position, and wherein, in the second, active orientation the first portion has pivoted about the pivot point out of the plane of the flat bed.

Preferably the pivot point is adjacent a front end of the flat bed.

Preferably the first crane portion is movable between a rest and an active position by means of a ram.

Preferably a first end of the ram is engaged with the trolley and a second end is engaged with the first portion of the crane.

Preferably the ram is a hydraulic ram.

Preferably the flat bed trolley includes a front end and a rear end, wherein the articulated crane is adaptable to extend beyond the front end so as to be able to load, and unload, articles from directly in front of the trolley.

Preferably the first portion of the crane provides for an extension beyond the front end of the trolley that is greater than for a crane without a first portion forming part of the receiving surface of the flat bed when at rest, thereby extending the reach of the crane. Preferably the crane includes further portions pivotally engaged together.

Preferably the locomotion means include caterpillar tracks.

Preferably the locomotion means include an engine.

Preferably the crane is adapted for engagement with an attachment.

Preferably the attachment is a loading shovel or a post hole borer.

Preferably the trolley load transporter includes at least one further arm hinge-ably attached to the flat bed, and moveable between first, second and third positions wherein in the first position the further arm acts as a stabilising outrigger for the trolley, in the second position the further arm is stowed away, and in the third position the further arm secures any articles loaded atop the platform.

Preferred embodiments of the present invention will now be described by way of example only and with reference to the accompanying drawings in which:
Figure 1 shows a trolley in accordance with the present invention including a crane, for moving a load;
Figure 2 shows the trolley of Figure 1 with the crane in an extended orientation gripping a load;
Figure 3 shows the trolley of Figure 2 with the load gripped by the crane, the crane moving the load onto the trolley bed;
Figure 4 shows the trolley of Figure 3 with the load resting on the trolley bed;
Figure 5 (a) and (b) shows a second embodiment of the trolley;
Figure 6 (a) and (b) how a feature of the trolley of Figure 1 in an engaged and unengaged orientation, respectively.

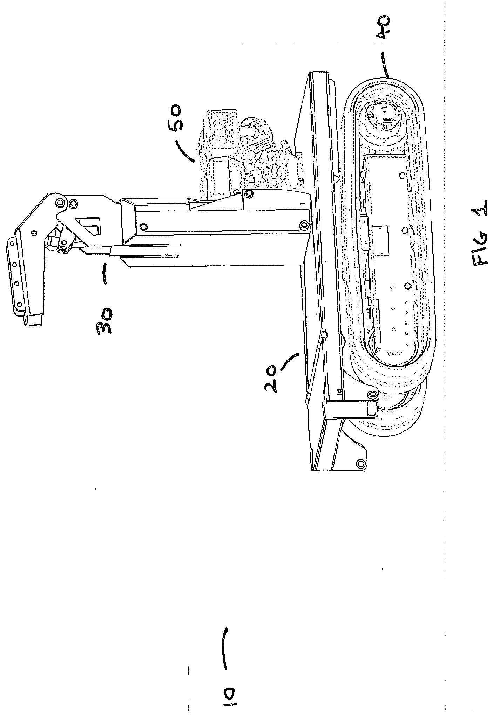

Figure 1 shows a trolley 10 including a flat bed 20 for receiving a load, a crane 30 for gripping and hoisting a load onto the flat bed of the trolley, caterpillar tracks 40 for moving the trolley, and an engine 50 for operating the crane and tracks.

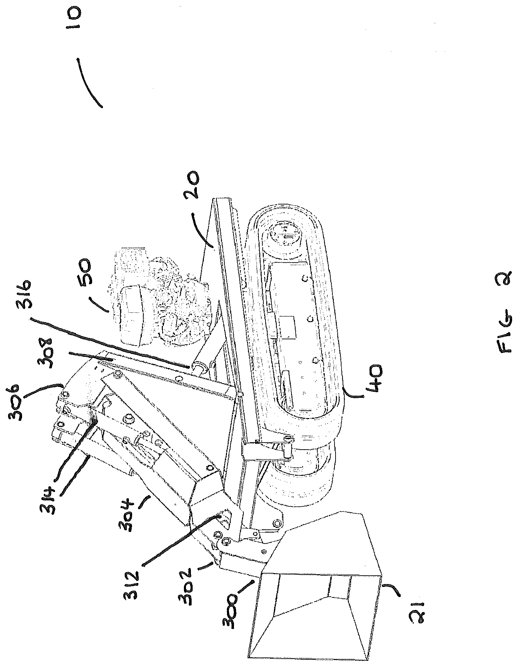

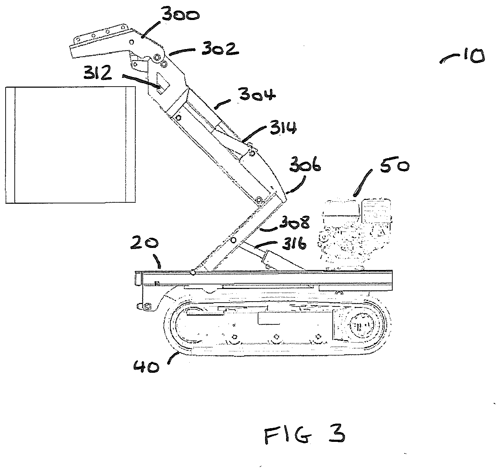

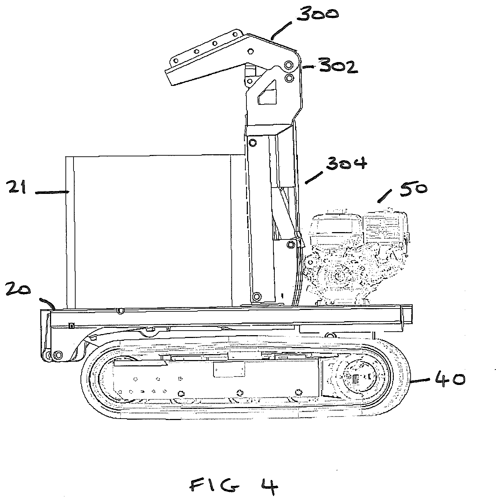

Figure 2 shows more details of the crane 30 including conventional gripping head 300 and arm 304, and also a further portion 308 which with the crane at rest, as shown in Figures 1 and 4, provides a portion of the flat bed of the trolley and with the crane in an active orientation, as shown in Figures 2 and 3, forms an integral part of the arm or boom and therefore extends the reach of the crane.
Figure 2 shows the crane 30 in an extended orientation positioned to engage with a load 21 in front of the trolley so that the load may be moved onto the flat bed 20 of the trolley and then to a new, desired location by means of the caterpillar tracks 40. Gripping head 300, for gripping the load, is pivotally attached at pivot point 302 to an arm or boom 304 which is itself pivotally attached at pivot point 306 to further portion 308. Further portion 308 of the crane is pivotally attached at pivot point 310, or hingedly attached, to the flat bed 20 of the trolley.

Pivotal movement of head 300 about arm 304 at pivot point 302 is conventionally controlled by piston 312, pivotal movement of arm or boom 304 about pivot point 306 is conventionally controlled by pistons 314, and pivotal movement of further portion 308 about pivot point 310 is conventionally controlled by piston 316. Pistons 312, 314 and 316 are powered by the engine 50.

Pistons 312 and 314 are held within the arm or boom 304 as shown in Figure 2. Piston 316 is positioned, at rest, below the flat bed 20 of the trolley, in which arrangement further portion 308 is also in a rest orientation in the plane of the flat bed, forming part of the flat bed of the trolley. Piston 316 is extendable from this rest position to an active position, causing further portion 308 to pivot about pivot point 310 out of the plane of the flat bed to form an extension of arm or boom 304. Pistons 314 may also extend from a rest to an active position urging the arm or boom 304 to pivot about pivot point 306 and piston 312 may extend from a rest to an active position to adjust the position of the gripper head and allow the gripper head to grip load 21.

With the load engaged with the crane, for example following the gripper head 300 gripping the load 21, action of pistons 312, 314 and 316 co-operate to raise the load above, and move the load towards, the flat bed of the trolley, and this arrangement may be seen in Figure 3. As the load continues to move over the flat bed 20 of the trolley further portion 308 pivots about pivot point 310 due to action of piston 316, and pivot point 306, at an end of the further portion 308 remote from pivot point 310, moves toward the flat bed 20 of trolley 10, until further portion 308 assumes a rest position in the plane of the flat bed and completes the flat bed receiving surface of the trolley. Arm 304 and gripper head 300 also pivot about pivot points 306 and 302 respectively until the load is comfortably above, and lowers onto, flat bed 20 including the further portion 308. This is shown, with the load at rest on the flat bed of the trolley, in Figure 4.

As stated above, Figure 4 shows the load 21 resting on the bed of the trolley, the bed including further portion 308 of the crane.

In addition, as can be seen from Figure 4, the load when at rest on the trolley may rest against arm 304 which provides a 'back plate' or headstock for the payload once the arm is at rest with the load upon the flat bed. This also provides for the load to be pinned against the arm 304 of the crane, thereby enabling secure load retention during transport of the load.

In addition to portion 308 of the crane having a dual function, providing a part of the crane and also part of the flat bed, portion 304 of the crane has a dual function, providing a part of the crane and also forming a back plate for the payload. This duality has the added advantage that less real estate is reserved for these functions than would be the case if the functions were accommodated separately.

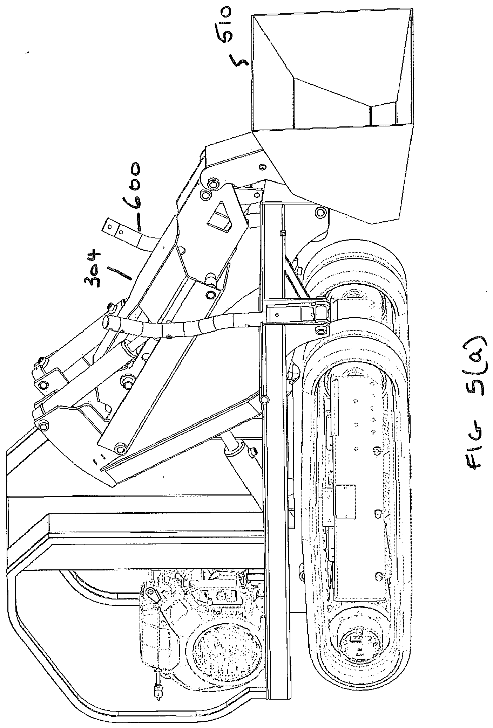

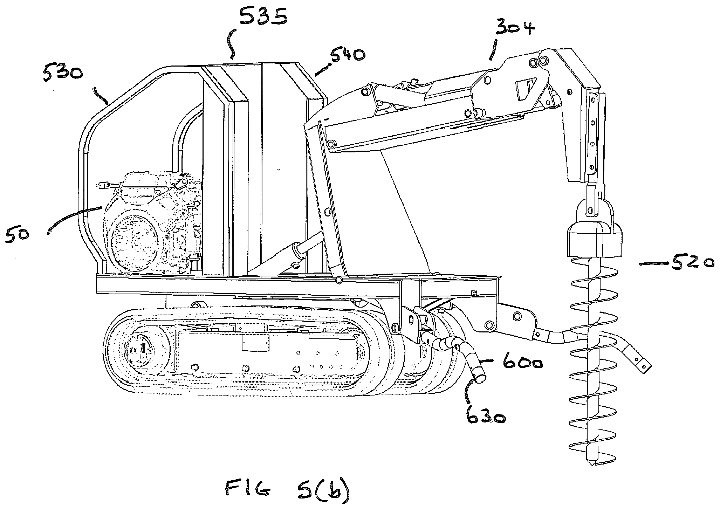

As the portions of the crane with dual functionality are relied upon to form the bed of the trolley and also the back plate for the payload, it is contemplated that they will have a significant cross section, larger than the cross section of a crane without portions including this additional functionality, and this results in a crane with a significantly enhanced mechanical strength compared to a conventional crane. As a consequence, such a crane can perform multiple functions in addition to simply loading and unloading the trolley. Examples of such functionality are shown in Figures 5 (a) and 5 (b).

Figure 5 (a) shows the distal end of the crane arm 304 with a loading shovel attachment 510, such that the trolley may be adapted to act as a loading shovel should the need arise.

Figure 5 (b) shows the distal end of the crane arm 304 with a post hole borer 520 attached thereto, such that the trolley may be adapted to create post holes should the need arise.

It is contemplated that other attachments may be utilised to extend the functionality of the trolley, as required.

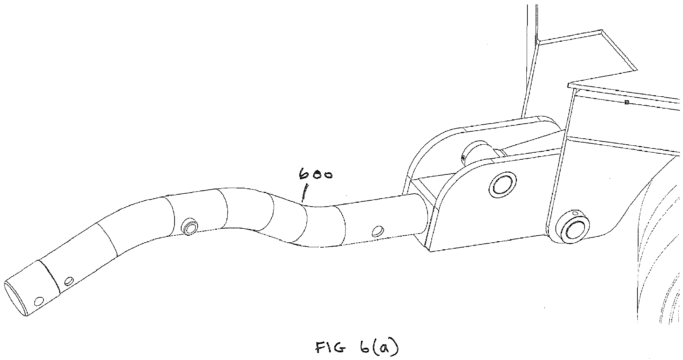

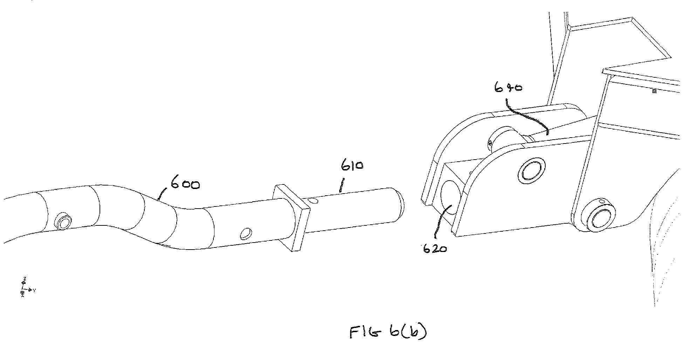

Figure 6 (a) and (b) show a feature of the trolley of the present invention including a removable rod 600, engageable with the trolley, shown in an engaged orientation in Figure 6 (a), and shown in a disengaged orientation in Figure 6 (b). The rod may extend away from the trolley to provide a stabiliser while the trolley is being loaded or unloaded, or preparatory thereto, for example while the crane is in an extended orientation, as seen in Figure 5 (b), and may be adjusted to stabilise or retain the load on the trolley once the trolley has been loaded. There may be more than one such rod on the trolley and the location or locations of such rods depends on the level of stabilisation and/or the load securing needed.

Figure 5 (b) shows the rods 600 in use, in a first engaged orientation and relied upon to stabilise the trolley when for example the crane is in an extended orientation with a post hole borer attached to the end of the crane.

Figure 5 (a) also shows the rods in use, in a second engaged orientation. In this second engaged orientation the rods are rotated from the first engaged orientation shown in Figure 5 (b) and may, with a load resting on the bed, assist in retaining the load on the bed by urging against the load in a direction of the back plate (not shown).

To assist with securely retaining the load on the trolley, it is contemplated that the load will remain engaged with the gripping head of the crane while it rests on the bed of the trolley, and during transit.

As well as powering the pistons, engine 50 is also operable to activate the trolley caterpillar tracks 40 to move the trolley, plus load, as required.

Figures 5 (a) and 5 (b) also show a further embodiment of the trolley including a housing 530 to house motor 50, the housing comprising walls 535, 540 and further features to protect and secure the motor 50. An advantage of the housing is that crane portion 304 forming the back plate when at rest, may be received within walls 535, 540 for improved security and strength.

Once the trolley has reached its destination the process shown in Figures 1 - 4 is reversed, with the gripping head gripping the load on the trolley, the pistons operating to shift the load up and away from the trolley bed and off the trolley to be positioned on the ground or on another surface remote from the trolley bed.

In use, a load to be moved may be on the ground ready for relocation. A trolley in accordance with the present invention may move, by means of the motor 50 and caterpillar tracks 40, towards the load and position itself adjacent the load, for example in front of the load, in a convenient location. On arrival adjacent, or in front, of the load crane 30 is at rest on the trolley, the pistons 312, 314, and 316 are at rest also, and further portion 308 of crane 30 is in the plane of, and contributes to, the flat bed 20 of the trolley, with further portion 304 of crane 30 forming a back plate, possibly nestled within walls 535, 540 of housing 530.

Rod 600, as shown in Figures 6 (a), 6 (b) and 5 (b), may be engaged with the trolley by inserting end 610 of the rod into opening 620 of the trolley such that a second rod end 630 (shown in Figure 5 (b)) remote rod end 610 rests on the ground or against another structure (not shown) providing a counterbalance or otherwise stabilising the trolley in anticipation of the loading step.

Motor 50 is adapted to activate piston 316 so that further portion 308 of the crane is urged out of the plane of the flat bed due to pivoting action of the further portion 308 about pivot point 310 moving the end of the further portion remote the pivot point 310 away from the trolley. Motor 50 is also adapted to activate pistons 314 to urge an end of arm 304 remote pivot point 306 away from or towards further portion 308, and to activate piston 312 to urge gripping head 300 about pivot point 302 to a convenient orientation to engage with load 21.

Gripping head 300 then engages with load 21 to secure the load thereto and motor 50 controls pistons 312, 314, 316 to adjust gripping head 300, arm 304 and further portion 308 so that crane 30 lifts the load off the ground to a height above the flat bed surface, and then moves the load over the flat bed surface before lowering the load onto the flat bed, the lowered load resting on the flat bed including the portion of the crane, further portion 308, contributing to the flat bed, and further portion 304 acting as a back plate or headstock of the trolley.

To provide the trolley with increased load carrying flexibility, end 610 of the or each rod 600 may then be removed from the opening 620 of the trolley to remove the rod completely, or the position of each rod 600 may be adjusted by pistons 640 which are located under the bed. For example, pistons 640 may urge the rod, or rods, 600 against the load on the trolley to secure the load thereto, or the rods may be urged towards crane arm portion 304, which additionally forms a load restraining back plate during the transport phase, to provide a retaining force to retain the load on the trolley.

The motor then engages caterpillars 40 to move the trolley to a desired destination at which the operation may be reversed to replace any retaining rods 600, by inserting rod ends 610 into openings 620, as required, to stabilise the trolley. The load may then be removed from the flat bed of the trolley and onto the ground or other desired surface.

As discussed, this invention relates to an apparatus which can, at a first location, lift a weight onto itself and store it securely thereon while moving it to a second location at which the weight can be unloaded, the apparatus in particular maximising the reach of the crane and maximising the weight and size of the load that may be moved while minimising the size of the apparatus and space needed to store the load.

A particular advantage of the present invention is the dual-purpose nature of a first portion of the crane, which as well as forming part of the crane also forms part of the receiving surface of the flat bed of the trolley on which any load to be lifted by the crane, and carried by the trolley, may rest. This means that the reach of the crane is greater than would be expected considering the arm 304 and gripper head 300, as it is enhanced by the further portion 308 that forms a portion of the flat bed of the crane, considering in particular that the further portion pivots about pivot point 310 positioned forwardly on the flat bed of the trolley, nearer any load to be carried, extending the reach of the crane even further.

A further advantage of the present invention is the dual-purpose nature of a second portion of the crane, which as well as forming part of the crane also forms a back plate or headstock of the machine, providing additional security for a load retained on a trolley.

A still further advantage of the present invention, resulting from the dual-purpose nature of the two portions of the crane is that the functionality of the trolley may be enhanced by attaching a device such as a post hole borer, a loading shovel or other device to an end of the crane, to provide a more flexible and useful device.

These advantages also mean that the real estate of the flat bed, the available surface for receiving a load to be carried, is maximised, the impact on available space of having a crane on the trolley is minimised, and the security of the load including the load when in transit or at rest, is enhanced.

The invention is not restricted to the details of the foregoing embodiments. For example, there are many ways in which a crane can engage with a load other than by gripping, and it is contemplated that the present invention covers such other ways. In addition, pistons 314 are discussed as pairs of pistons, and it is contemplated that there could be a single piston, or several pistons. Pistons 312 and 316 are also discussed as single pistons and it is contemplated that a plurality of such pistons are covered by the present disclosure. The trolley is discussed in terms of caterpillar tracks; however it is contemplated that the present invention also covers wheels or any other transport mechanism. In addition, the present invention discussed pivotal motion about pivot points on the trolley and/or crane, however it is contemplated that any other hinge or rotatable arrangement is covered by the present disclosure.

## Claims

1. A load transporter comprising:
a flat bed trolley,
flat bed trolley locomotion means,
an articulated crane with a first portion including a first end engaged with the flat bed of the trolley and a second end, the first portion movable between a first, rest position with the first and second ends in the plane of the flat bed, the first portion providing part of a receiving surface of the flat bed, and a second, active position where the second end is remote from the flat bed and the portion does not form part of a receiving surface of the flat bed.

2. The load transporter of claim 1, wherein said crane further comprises a second portion with a first end and a second end, said first end engaged with a second end of the first crane portion, said second portion movable between a first, rest position providing a back plate or headstock of the trolley and a second, active position where the second portion does not form said back plate.

3. The load transporter of claim 1, wherein said first crane portion moves between a rest and an active position pivotally about a pivot point, or
wherein said first crane portion moves between a rest and an active position pivotally about a pivot point wherein said first end is the pivot point.

4. The load transporter of claim 1, wherein said first crane portion is planar and fits, when in a rest position, into a corresponding gap in the flat bed.

5. The load transporter of any one of claims 1 to 4, wherein said first crane portion forms a substantial portion of the flat bed, when in a rest position.

6. The load transporter of claims 1 to 5, wherein said first portion is planar and is substantially in the same plane as the flat bed of the trolley when in said first, rest position.

7. The load transporter of any one of the preceding claims wherein said first crane portion is planar and is substantially in the same plane as the flat bed of the trolley when in said first, rest position, and wherein, in said second, active orientation said first portion has pivoted about said pivot point out of the plane of the flat bed.

8. The load transporter of claims 1 to 7, wherein said pivot point is adjacent a front end of the flat bed.

9. The load transporter of claim 1, wherein said first crane portion is movable between a rest and an active position by means of a ram, and/or
wherein said first crane portion is movable between a rest and an active position by means of a ram, and wherein a first end of said ram is engaged with the trolley and a second end is engaged with said first portion of said crane.

10. The load transporter of claim 9, wherein said ram is a hydraulic ram.

11. The load transporter of any one of the preceding claims wherein said flat bed trolley includes a front end and a rear end, and wherein said articulated crane is adaptable to extend beyond the front end so as to be able to load, and unload, articles from directly in front of the trolley, and/or
wherein said first portion of the crane provides for an extension beyond the front end of the trolley that is greater than for a crane without a first portion forming part of the receiving surface of the flat bed when at rest, thereby extending the reach of the crane.

12. The load transporter of any one of claims 1 to 11, wherein said crane includes further portions pivotally engaged together.

13. The load transporter of claim 1, wherein said locomotion means include:
caterpillar tracks, and/or
an engine.

14. The load transporter of claim 1, wherein the crane is adapted for engagement with an attachment, or
wherein the crane is adapted for engagement with an attachment and the attachment is a loading shovel or a post hole borer.

15. The load transporter of claim 1, wherein the trolley load transporter includes at least one further arm hinge-ably attached to the flat bed, and moveable between first, second and third positions wherein in said first position said further arm acts as a stabilising outrigger for said trolley, in said second position said further arm is stowed away, and in said third position said further arm secures any articles loaded atop the platform.
